# FASCICULE DE BREVET EUROPEEN

(11) **EP 0 953 281 B1**
(45) Date de publication et mention de la délivrance du brevet: **13.03.2002**
(21) Numéro de dépôt: 98108029.4
(22) Date de dépôt: 02.05.1998
(51) Int. Cl.: A01K 39/01

(54) **Corps de nourriture pour animaux domestiques**
Fütterkörper für Haustiere
Feedblock for domestic animals

(43) Date de publication de la demande: 03.11.1999
(73) Titulaire: SOCIETE DES PRODUITS NESTLE S.A., 1800 Vevey (CH)
(72) Inventeur: Martin, Thierry, 60117 Gondreville (FR); Bazzaro,Gianni, 33040 Povoletto (Udine) (IT)
(74) Mandataire: Thomas, Alain

(56) Documents cités:
- EP-A- 0 021 052
- DE-A- 3 502 700
- GB-A- 756 828
- GB-A- 2 210 245

## Description

La présente invention concerne un corps de nourriture entièrement comestible pour animaux domestiques.

Il existe déjà sur le marché de nombreux corps de nourriture pour animaux domestiques , en particulier des systèmes pour des oiseaux, dans lesquels on dispose des graines sur un support qui n'est pas du tout comestible. Le brevet DE 3502700, par exemple, concerne un corps de nourriture pour oiseaux comportant une tige en bois comme support pour les graines.

Le but de la présente invention est aussi d'avoir un support, mais ledit support est comestible. Ceci présente le grand avantage de minimiser les pertes de matière et de pouvoir rajouter des éléments nutritionnels, par exemple des sels minéraux et des vitamines.

La présente invention concerne un corps de nourriture pour animaux domestiques entièrement comestible , comprenant un noyau central de forme allongée, de section sensiblement circulaire ou carrée , sur laquelle est collée au moins une couche d'un mélange à base de graines, ledit noyau central étant obtenu par cuisson extrusion à partir d'un mélange à base d'eau, de farine, de graines et éventuellement de sucre.

Il faut que le noyau central soit rigide, de manière à ce que l'application des graines se fasse de manière bien uniforme sur ledit support. Ce noyau central est de section circulaire, ovale, avec des lobes, ou sensiblement carré ou rectangulaire. Le type de farine du noyau central n'est pas critique et on utilise de préférence de la farine de blé, de maïs, et de tout autre type de céréales. Comme système pour la cuisson extrusion, on prend soit un bi-bis, soit un mono-vis, soit un autre système connu dans l'état de la technique et permettant de faire la cuisson extrusion souhaitée. La teneur en farine du noyau est comprise entre 40 et 90 % du noyau final et celle en eau de l'ordre de 2 à 11 %. Tous les pourcentages dans la présente description sont en poids.

Le corps de nourriture selon l'invention est surtout prévu pour les oiseaux, bien qu'il soit également possible de le donner à des rongeurs, comme des cobayes, des hamsters ou des lapins. Par oiseaux, on entend aussi bien les oiseaux de cage, comme les perruches, les canaris et autres que les oiseaux de jardin.Dans le cas où il serait plutôt à considérer pour de oiseaux, il est préférable que le noyau contienne aussi des graines, de manière à rendre le produit attractif jusqu'au bout. La teneur en graines est normalement comprise entre 0 et 70 %, de préférence de l'ordre de 50 à 60 %. Le type de graines utilisable n'est pas critique. On utilise par exemple des graines de millet, de blé, d'avoine, de colza, d'alpiste, de sorgho, de tournesol et autres. Ce sont les mêmes types de graines qu'on retrouve dans les couches de graines autour du noyau central.

Le corps de nourriture selon l'invention comprend autour du noyau central une première couche de graines de petite taille et par dessus une seconde couche de graines de taille supérieure. Pour les rongeurs, il est également possible de n'avoir qu'une seule couche de graines. On peut également envisager des couches de graines de taille moyenne et/ou des couches de graines de taille supérieure. Par graines de taille moyenne, on entend des graines ayant une granulométrie moyenne de 2 à 6 mm de diamètre environ. Par graines de taille supérieure, on entend des graines ayant une granulométrie moyenne de 6 à 8 mm de diamètre environ.

Pour que les graines adhèrent bien au noyau central, il faut qu'elles soient mélangées avec une colle. Cette colle est de l'amidon modifié, par exemple de l'amidon modifié de maïs ou de blé. La colle peut également contenir des colorants, des vitamines ou des sels minéraux.

Le rapport en poids du noyau par rapport aux couches de graines (colle comprise) est normalement compris entre 1:3 et 1:6. Le rapport en poids de graines par rapport à la colle est compris entre 1:1 et 1:2.

Les couches de graines peuvent également contenir des morceaux de fruits séchés et de pain coloré.

On dispose ainsi selon l'invention d'une nourriture pour oiseaux totalement comestible. On peut adapter le poids final de ladite nourriture en fonction de la taille des oiseaux.

La présente invention concerne également le procédé de fabrication du corps de nourriture , dans lequel on fait dans un premier temps une cuisson extrusion d'un mélange à base de farine, d'eau, éventuellement de sucre à une température supérieure à 200 °C et dans un deuxième temps au moment de l'addition des graines, on poursuit la cuisson extrusion à une température de moins de 180 °C, on extrude et on coupe le produit expansé à la taille souhaitée, on applique sur chaque produit une couche de colle, on applique sur la couche de colle une couche de graines et on passe dans un four de séchage. Il est également possible d'appliquer une seconde couche de colle , une seconde couche de graines et un deuxième séchage.

Le profil de température pour la cuisson extrusion est de l'ordre de 160 à 240 °C, à savoir une température supérieure à 200 °C dans la première partie et une tempérarure inférieure à 180 °C dans la seconde partie. La farine est introduite vraiment à l'entrée de l'extrudeur, tandis que si ajoute des graines, celles-ci sont additionnées en bout de l'extrudeur. Le produit extrudé et expansé est coupé à la taille souhaitée, par exemple on prévoit des noyaux ayant une longueur de l'ordre de 10 à 20 cm. Les noyaux arrivent ensuite sur une bande transporteuse et on y fait tomber une quantité de colle, puis ils passent sur une autre bande transporteuse sur laquelle arrive la quantité nécessaire de graines. Le produit passe finalement dans un four de séchage et il est prêt à être emballé.

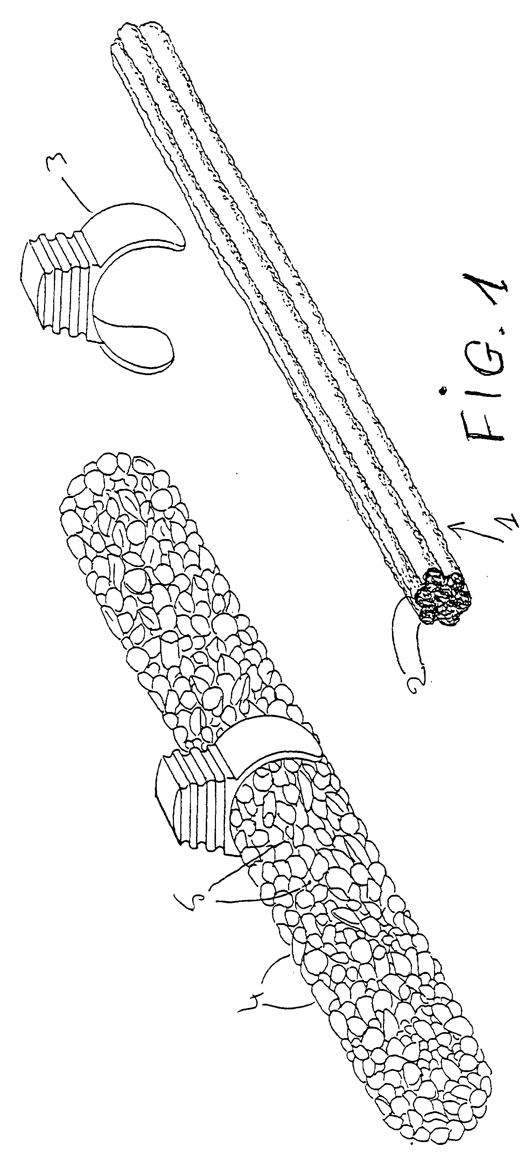

La suite de la description est faite en référence aux dessins sur lesquels
Fig. 1 est une vue en perspective du corps de nourriture selon l'invention et
Fig. 2 est une représentation schématique du dispositif pour la fabrication du produit selon l'invention.

Le noyau central (1) est de forme allongée et de section sensiblement circulaire avec des lobes (2). Il est enrobé avec des graines (4) qui sont dans le cas présent des graines de diverses céréales. Elles ont une granulométrie de l'ordre de 2 à 8 mm. La colle (5) permet auxdites graines de bien rester collées sur le noyau central. La bague (3) enserre le corps de nourriture et permet de le solidariser sur les grilles de la cage de l'oiseau.

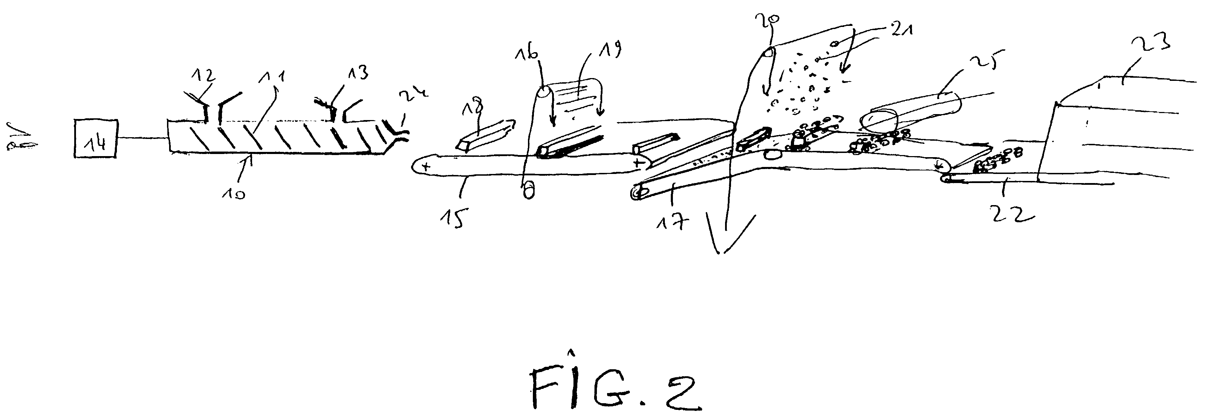

La Figure 2 représente le dispositif de fabrication du corps de nourriture selon l'invention. L'extrudeur (10) avec une mono-vis (11) présente une trémie (12) pour l'arrivée de farine et d'eau et une trémie (13) pour l'addition de graines. La vis (11) est mue par un moteur (14). On a en aval une bande transporteuse (15) avec un système (16) d'arrivée de colle. La bande transporteuse suivante (17) véhicule le noyau central (18) avec la colle (19) vers un système (20) d'arrivée d'une première couche de graines (21). La bande transporteuse (22) permet finalement le passage du corps de nourriture dans le tunnel de séchage (23). La figure montre l'application d'une seule couche de graines. Il est bien certain que pour appliquer une seconde couche de graines, il suffit de répéter le système avec les bandes transporteuses (15,17,22).

Le dispositif opère de la manière suivante : Le moteur (14) entraine la vis (11) alimentée avec l'eau, la farine, les graines et éventuellement du sucre. Dans la première partie de l'extrudeur, on a une température de l'ordre de 220 °C et après l'introduction des graines, on baisse la température à environ 160 °C. A la sortie (24) de l'extrudeur on coupe pour obtenir des noyaux (18). La bande transporteuse (15) améne ledit noyau sous un rideau de colle (19). L'enduction est uniforme sur toute la périphérie du noyau. La bande transporteuse (17) améne alors le noyau avec la colle sous une arrivée de graines (21). Le rouleau (25) permet une répartition uniforme sur le pourtour du noyau. On arrive finalement avec la bande transporteuse (22) dans le tunnel de séchage (23) fonctionnant à une température de l'ordre de 80 °C.

La suite de la description est faite en référence à un exemple.

### Exemple

On introduit dans l'extrudeur un mélange de 93 % de farine de blé avec 7 % de sucre. Ce mélange est dosé dans une proportion de 40 % qui est alors mélangé avec 60 % de graines. Ces graines sont des graines de diverses céréales. On sort un noyau central qu'on coupe pour avoir une longueur de 14 cm ayant un poids d'environ 10 g. On fait ensuite tomber sur ce noyau environ 7 g d'amidon modifié de maïs et finalement 9 g de graines ayant une granulométrie de l'ordre de 2 à 6 mm.

On envisage ensuite une seconde couche avec 10 g de colle et 14 g de graines de granulométrie un peu supérieure à la couche précédente.

On soumet ce produit à des perruches et on constate qu'elles le consomment vraiment dans son intégralité, car le noyau présente une bonne proportion de graines.

## Revendications

1. Corps de nourriture pour animaux domestiques , comprenant un noyau central (1) de forme allongée, sur lequel est collé au moins une couche d'un mélange à base de graines (4) **caractérisé en ce qu'**il est entièrement comestible et **en ce que** le noyau central est de section sensiblement circulaire ou carrée et est obtenu par cuisson extrusion à partir d'un mélange à base d'eau, de farine, de graines et éventuellement de sucre.

2. Corps de nourriture selon la revendication 1 , **caractérisé en ce que** le noyau central (1) contient entre 0 et 70 % de graines.

3. Corps de nourriture selon l'une des revendications 1 ou 2 , **caractérisé en ce que** le noyau central (1) comporte une première couche de graines de petite taille et par dessus une seconde couche de graines de taille supérieure.

4. Corps de nourriture selon l'une des revendications 1 à 3, **caractérisé en ce que** la colle (5) pour les graines est de l'amidon modifié.

5. Corps de nourriture selon l'une des revendications 1 à 4, **caractérisé en ce que** le rapport en poids de graine sur la colle est compris entre 1:1 et 2:1.

6. Corps de nourriture selon l'une des revendications 1 à 5, **caractérisé en ce que** la couche de graines contient en outre des morceaux de fruits séchés et de pain coloré.

7. Procédé de fabrication d'un corps de nourriture selon l'une des revendications 1 à 6, dans lequel on fait dans un premier temps une cuisson extrusion d'un mélange à base de farine, d'eau, éventuellement de sucre à une température supérieure à 200 °C et dans un deuxième temps au moment de l'addition des graines, on poursuit la cuisson extrusion à une température de moins de 180 °C, on extrude et on coupe le produit expansé à la taille souhaitée, on applique sur chaque produit une couche de colle (5), on applique sur la couche de colle (5) une couche de graines (4) et on passe dans un four de séchage.

## Patentansprüche

1. Nahrungsmittelkörper für Haustiere, der einen zentralen Kern (1) langgestreckter Form aufweist, auf dem mindestens eine Schicht aus einer Mischung auf der Grundlage von Körnern (4) aufgeklebt ist, **dadurch gekennzeichnet, dass** es vollständig essbar ist und dass der zentrale Kern einen im wesentlichen kreisförmigen oder quadratischen Querschnitt hat und durch Kochextrusion aus einer Mischung auf der Grundlage von Wasser, Mehl, Körnern und ggf. Zucker hergestellt ist.

2. Nahrungsmittelkörper nach Anspruch 1, **dadurch gekennzeichnet, dass** der zentrale Kern (1) zwischen 0 und 70% Körner enthält.

3. Nahrungsmittelkörper nach einem der Ansprüche 1 oder 2, **dadurch gekennzeichnet, dass** der zentrale Kern (1) eine erste Schicht aus Körnern kleiner Größe und darauf eine zweite Schicht aus Körnern von größerer Größe umfasst.

4. Nahrungsmittelkörper nach einem der Ansprüche 1 bis 3, **dadurch gekennzeichnet, dass** der Klebstoff (5) für die Körner modifizierte Stärke ist.

5. Nahrungsmittelkörper nach einem der Ansprüche 1 bis 4, **dadurch gekennzeichnet, dass** das Gewichtsverhältnis der Körner zum Klebstoff zwischen 1:1 und 2:1 beträgt.

6. Nahrungsmittelkörper nach einem der Ansprüche 1 bis 5, **dadurch gekennzeichnet, dass** die Körnerschicht außerdem Stücke von Trockenobst und gefärbtem Brot enthält.

7. Verfahren zur Herstellung eines Nahrungsmittelkörpers nach einem der Ansprüche 1 bis 6, bei dem man in einem ersten Schritt eine Kochextrusion einer Mischung auf der Grundlage von Mehl, Wasser und ggf. Zucker bei einer Temperatur über 200°C vornimmt und in einem zweiten Schritt zum Zeitpunkt der Beigabe der Körner die Kochextrusion bei einer Temperatur von weniger als 180°C weiterführt, extrudiert und das expandierte Produkt auf die gewünschte Größe schneidet, auf jedes Produkt eine Klebstoffschicht (5) aufbringt, auf die Klebstoffschicht (5) eine Schicht aus Körnern (4) aufbringt und das Produkt in einen Trockenofen einbringt.

## Claims

1. Pet food body comprising a central core (1) having an elongated shape onto which at least one layer of a seed-based mixture (4) is glued, **characterized in that** it is entirely edible and **in that** the central core has a substantially circular or square section and is obtained by extrusion-cooking from a mixture based on water, flour, seeds and optionally sugar.

2. Food body according to claim 1, **characterized in that** the central core (1) contains between 0 and 70 % seed.

3. Food body according to either of claims 1 or 2, **characterized in that** the central core (1) includes a first layer of small sized seeds above a second layer of larger sized seeds.

4. Food body according to one of claims 1 to 3, **characterized in that** the adhesive (5) for the seeds is a modified starch.

5. Food body according to one of claims 1 to 4, **characterized in that** the ratio by weight of seed to glue is between 1:1 and 2:1.

6. Food body according to one of claims 1 to 5, **characterized in that** the layer of seeds additionally contains pieces of dried fruit and coloured bread.

7. Method for producing a food body according to one of claims 1 to 6, wherein firstly a mixture based on flour, water and optionally sugar is extrusion-cooked at a temperature above 200°C and secondly, at the moment the seeds are added, extrusion-cooking is continued at a temperature below 180°, the expanded product is extruded and cut up into the desired size, a layer of adhesive (5) is applied to each product, a layer of seeds (4) is applied to the layer of adhesive (5) and the product is passed into a drying oven.
